# EUROPÄISCHE PATENTSCHRIFT

(11) **EP 0 549 639 B1**
(45) Veröffentlichungstag und Bekanntmachung des Hinweises auf die Patenterteilung: **15.11.1995**
(21) Anmeldenummer: 91916258.6
(22) Anmeldetag: 17.09.1991
(51) Int. Cl.: G21C 3/32, G21C 3/322, G21C 21/00

(54) **BRENNELEMENT FÜR EINEN SIEDEWASSER-REAKTOR MIT EINEM AUS STANDARDISIERTEN TEILEN GEFERTIGTEN FUSS**
FUEL ELEMENT FOR A BOILING WATER REACTOR WITH A FOOT MADE OF STANDARD PARTS
ELEMENT COMBUSTIBLE POUR REACTEUR A EAU BOUILLANTE PRESENTANT UN SUPPORT COMPOSE D'ELEMENTS STANDARDISES

(30) Priorität: 18.09.1990 DE 4029539
(43) Veröffentlichungstag der Anmeldung: 07.07.1993
(73) Patentinhaber: SIEMENS AKTIENGESELLSCHAFT, 80333 München (DE)
(72) Erfinder: LIPPERT, Hans-Joachim, D-8552 Höchstadt (DE); MEIER, Werner, D-8551 Kunreuth (DE)
(86) Internationale Anmeldenummer: DE9100735
(87) Internationale Veröffentlichungsnummer: WO9205563

(56) Entgegenhaltungen:
- EP-A- 0 122 191
- EP-A- 0 311 037
- DE-A- 2 046 272
- DE-A- 3 619 930
- US-A- 4 655 995

## Beschreibung

Die Erfindung betrifft ein Brennelement für einen Siedewasser-Reaktor und insbesondere das Fußteil eines derartigen Brennelementes.

Bekanntlich enthält ein Brennelement für einen Siedewasser-Reaktor ein Bündel zueinander paralleler Brennstäbe, das seitlich von einem oben und unten offenen Brennelement-Kasten umgeben ist. Das offene, untere Ende des Brennelement-Kastens ist von einem Fußteil, das obere Ende von einer mit Kühlmittelauslässen versehenen Deckplatte abgedeckt.

Das Fußteil wird meistens von einem Übergangsstück und einer Bodenplatte gebildet, die zusammen aus einem einzigen Gußteil gefertigt sind. Das Übergangsstück umgibt einen sich längs einer Mittelachse nach oben trichterförmig erweiternden Strömungskanal und weist an dessen unteren Ende mindestens eine Eintrittsöffnung und an seinem oberen Ende einen Rand auf, an dem sich die Bodenplatte anschließt und der in das offene untere Ende des Brennelement-Kastens eingesetzt ist.

Im Stand der Technik weisen die Brennstäbe untere Endkappen auf, die in Bohrungen der Bodenplatte geführt sind. Einige der Brennstäbe sind dabei an der Bodenplatte verschraubt und auch mit ihren oberen Endstücken mit der Deckplatte verbunden, so daß sie ein festes Skelett bilden. Ist für ein Auswechseln einzelner Brennstäbe oder für andere Service-Arbeiten ein Zugang zum Inneren des Brennelementes nötig, so muß nach Entfernen des Brennelement-Kastens das Skelett zerlegt werden.

Wegen der Verschraubungen und Bohrungen zum Einsetzen der Brennstäbe ist für Durchtrittsöffnungen, durch die das Kühlmittel (Wasser) des Reaktors in die Brennelemente geleitet wird, nur noch beschränkter Raum. Da andererseits das Kühlmittel beim Durchtritt durch die Durchtrittsöffnungen nur einen möglichst geringen Druckverlust erleiden soll, muß dieser Raum in einer den thermohydraulischen Bedingungen entsprechenden Weise an die gesamte Auslegung des Brenelementes angepaßt werden.

Daher muß bei jeder Änderung der Auslegung des Brennelementes die Geometrie der Bodenplatte mit ihren Bohrungen und Öffnungen angepaßt werden, so daß auch stets neue Gußformen erforderlich werden.

Ferner stellt das Fußteil ein verhältnismäßig kompliziertes räumliches Gebilde dar, dessen Herstellung ein aufwendiges Gießverfahren erfordert und zu einem hohen Ausschuß führt. Vor allem an der Bodenplatte mit ihrem komplizierten System von Öffnungen und Stegen treten fast immer Unregelmäßigkeiten auf, die nachträglich überarbeitet werden müssen.

Aus der DE-A-3.619.930 ist ein anderer Aufbau eines Siedewasser-Brennelementes bekannt, bei dem die Brennstäbe mit einer Deckplatte und einer Bodenplatte verschraubt sind und einen Einsatz bilden, der in dem Brennelementkasten geschoben und am oberen Rand eines trichterförmigen Übergangsstückes eingesetzt werden kann. Der Brennelementkasten und das Übergangsstück, die aus unterschiedlichen Materialien gefertigt sind, sind dabei tragend miteinander verbunden, wozu besondere Maßnahmen erforderlich sind.

Der Erfindung liegt die Aufgabe zugrunde, durch einen verbesserten Aufbau des Fußteils den Aufwand für die Fertigung zu senken und die Anpassung an die Auslegung des jeweiligen Brennelementes zu vereinfachen.

Dies gelingt durch ein Fußteil mit einem Übergangsstück, das einen sich längs einer Mittelachse nach oben trichterförmig erweiternden Strömungskanal umgibt und an dessen unterem Ende mindestens eine Eintrittsöffnung für den das Brennelement durchströmenden Kühlmittelstrom und an seinem oberen Ende einen Rand aufweist, an dem eine durchgehende, eine Vielzahl von Kühlmitteleinlässen aufweisende, den Strömungskanal oben abdeckende Bodenplatte angeschweißt ist.

Das Fußteil besteht also im wesentlichen aus zwei vorgefertigten Teilen: dem Übergangsstück und einer einstückigen Bodenplatte (Stabhalteplatte). Das Übergangsstück ist als ein nach oben nicht abgedecktes Gußteil leicht herzustellen, während die Bodenplatte als ebenes Blechstück gefertigt werden kann. Die Herstellungskosten für diese beiden Teile liegen etwa bei der Hälfte der Kosten für das Gießen eines einteiligen Fußteiles. Selbst wenn Übergangsstück und Bodenplatte vor oder nach ihrem Verschweißen noch auf besondere Maßhaltigkeit nachbearbeitet werden, so ist der hierfür erforderliche Arbeitsaufwand geringer als für das Nacharbeiten von einteilig gegossenen Fußteilen. Darüber hinaus wird der Ausschuß verringert.

Da ferner für verschiedene Reaktortypen und für die verschiedenen Generationen von Brennelementen eines Reaktors im wesentlichen die gleichen Abemssungen der Brennelemente gefordert werden, sind für verschiedene Brennelementtypen zwar unter Umständen verschiedene Höhen der Fußteile, aber meist nur sehr geringe Änderungen der Querschnitte erforderlich. Es ist daher möglich, auch mit standardisierten Gießwerkzeugen auszukommen, insbesondere können diese Gießwerkzeuge hinsichtlich weniger Paramter (z.B. die Höhe des Fußteils) adaptierbar ausgebildet sein. In vielen Fällen erübrigt sich dann sogar nach dem Verschweißen jegliche Nachbearbeitung des fertigen Fußteils.

Die Erfindung schafft daher ein Brennelement für einen Siedewasser-Reaktor, mit
a) einem ein Bündel zueinander paralleler Brennstäbe seitlich umgebenden, oben und offenen Brennelement-Kasten,
b) einer mit Kühlmittelauslässen versehenen Deckplatte zum Abdecken des oberen Endes des Brennelement-Kastens, und
c) einem aus mehreren Einzelteilen gefertigten Fußteil. Die Einzelteile dieses Fußteils bestehen im wesentlichen aus
   i) einem gegossenen Übergangsstück, das eine Eintrittsöffnung an seinem unteren Ende und einen in das offene untere Ende des Brennelement-Kastens eingesetzten oberen Rand aufweist und einen sich von der Eintrittsöffnung nach oben trichterförmig erweiternden Strömungskanal umgibt, und
   ii) eine an den oberen Rand des Übergangsstücks angesetzte und dort angeschweißte Bodenplatte, die von Kühlmitteleinlässen durchsetzt ist und das offene untere Ende des Brennelement-Kastens abdeckt.

Daneben können am Fußteil noch weitere Einzelteile angebracht sein. Vorteilhaft können z.B. an der Bodenplatte und am oberen Rand des Übergangsstück mehrere gegen den Brennelement-Kasten abgestützte Federn anliegen, insbesondere können die Federn einen in ein seitliches Profil am oberen Rand des Fußteils eingreifenden Rand aufweisen. Vorteilhaft kann die Bodenplatte auch Bohrungen enthalten, in die Mittel zum Befestigen wenigstens einiger Brennstäbe greifen, wobei insbesondere diese Mittel als Steckverbindungen ausgebildet sein können. Dies ist besonders vorteilhaft, wenn ein Teil der Brennstäbe kürzer ist als ein anderer Teil der Brennstäbe, wobei dann nur für die kürzeren Brennstäbe derartige Befestigungsmittel vorgesehen sind.

Dies ist vor allem für Fälle vorgesehen, bei denen die Bodenplatte in der Mitte einen Durchbruch enthält, den das untere Endstück eines zu den Brennstäben parallelen Wasserrohres durchgreift, das die Bodenplatte mit der Deckplatte kraftschlüssig verbindet. Derartige, unten und oben offene Wasserrohre sind häufig vorgesehen, um auch dem oberen Teil des Brennelementes, in dem ein großer Teil des Wassers als Dampf vorliegt, eine ausreichende Menge flüssigen Moderators zuzuführen.

Bei dieser Konstruktion bilden also Bodenplatte, Wasserrohr und Deckplatte das Skelett des Brennelementes. Dabei ist es zweckmäßig, das untere Endstück des Wasserrohres verdrehungssicher in dem Durchbruch der Bodenplatte zu halten.

Vorteilhafte Weiterbildungen der Erfindung sind in den Unteransprüchen angegeben und werden anhand von 39 Figuren und mehreren Ausführungsbeispielen erläutert. Es zeigen:
- Figur 1: eine prinzipielle Darstellung der wichtigsten Teile eines Brennelementes für Siedewasser-Reaktoren,
- Figur 2: das untere Ende des Brennelementes, teils im Querschnitt, teils in einer Seitenansicht mit weggebrochener Wand des Fußteiles,
- Figur 3: eine Stoßstelle zwischen dem Übergangsstück und der Bodenplatte im Fußteil,
- Figur 4: eine Aufsicht auf das Fußteil,
- Figur 5: das Prinzip einer angeklippsten Dichtfeder,
- Figur 6: die Befestigung der Dichtfeder zwischen Kasten und Fußteil,
- Figur 7 und 8: einen Querschnitt und eine Seitenansicht der Dichtfeder,
- Figur 9: einen vergrößerten Querschnitt durch das untere Ende des Brenelementes im Bereich der Seitenkante des Fußteiles,
- Figur 10 und 11: eine Aufsicht und einen Querschnitt durch eine Ecke des Fußteils mit daran angeklippten Teilfedern,
- Figur 12 bis 14: eine perspektivische Ansicht, eine Aufsicht und einen Querschnitt einer angeklemmten Dichtfeder,
- Figur 15 und 16: Aufsicht und Querschnitt einer Dichtfeder mit angeformter Steckhülse,
- Figur 17 und 18: Querschnitte von Federhülsen zum Anklemmen von Dichtfedern,
- Figur 19: die Befestigung einer Dichtfeder mit Schraubhülsen,
- Figur 20 bis 22: Dichtfedern aus Teilfedern mit plattenförmigen Verbindungsteilen,
- Figur 23 und 24: eine bandförmig eingelegte Dichtfeder,
- Figur 25 und 26: eine gesicherte Steckverbindung zwischen dem Endstück eines Kühlmittelrohres und der Bodenplatte ("Stabhalter") in Längsschnitt und Querschnitt,
- Figur 27: einen Querschnitt durch eine andere Steckverbindung,
- Figur 28 und 29: Längsschnitte durch gesicherte Schraubverbindungen zwischen dem Endstück und der Bodenplatte,
- Figur 30 und 31: eine besonders vorteilhafte gesicherte Schraubverbindung zwischen dem Kühlmittelrohr und dem Fußteil in Längs- und Querschnitt der einen Sicherungsbolzen tragenden Teile,
- Figur 32: das Prinzip eines Bajonett-Verschlusses zwischen der Endkappe eines Brennstabes und der Bodenplatte,
- Figur 33: einen Längsschnitt durch einen besonders vorteilhaften Bajonettverschluß,
- Figur 34 und 35: einen Längsschnitt und einen Aufsicht eines Brennelementes,
- Figur 36 und 37: Querschnitte durch einen oberen und einen unteren Abstandhalter,
- Figur 38: einen Querschnitt durch einen Brennelementkasten, und
- Figur 39: eine Seitenansicht eines kürzeren Brennstabes und seiner Halterung im Brennelement.

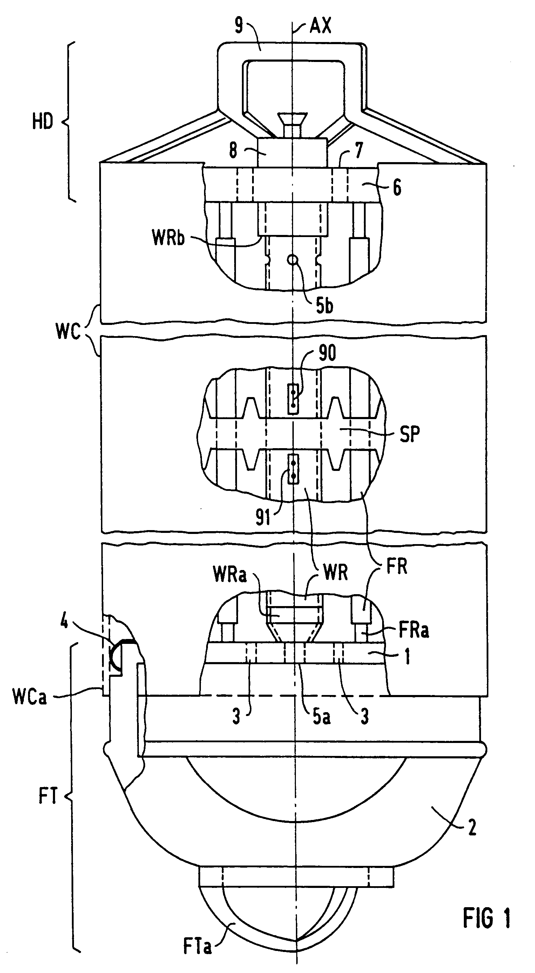

FIG 1 zeigt zunächst ein nichtmaßstabgetreues Schema für ein fertigmontiertes Brennelement, dessen Längsachse mit AX bezeichnet ist.

Das Brennelement ist seitlich umgeben von einem Brennelementkasten WC, der oben und unten offen ist. Dort befinden sich der Brennelemente-Kopf HD und das Brennelement-Fußteil FT.

Das Fußteil FT ist mittels eines Bügels FTa an einem Basisgitter im Kern eines Reaktors positioniert. Ein Übergangsstück 2 bildet einen Strömungskanal, der von einer Eintrittsöffnung 3a zu Kühlmitteleinlässen 3 in einer Bodenplatte 1 führt, die das Fußteil bzw. das untere Ende des Brennelementes abdeckt. Der untere Rand WCa des Brennelement-Kastens WC ist gegen das Fußteil FT und dessen Bodenplatte 1 mittels einer Dichtfeder 4 abgestützt und weitgehend gedichtet.

In axialer Richtung erstreckt sich ein Kühlmittelrohr ("Wasserrohr" WR) durch das Innere, vorzugsweise das Zentrum des Kastens WC. Es trägt jeweils am unteren und oberen Ende ein Endstück WRa und WRb sowie Öffnungen 5a, 5b zum Durchtritt von Kühlmittel (Wasser).

Zwischen Abschlagkörpern 90, 91 sind am Kühlmittelrohr in vorgegebenen, axialen Positionen Abstandhalter ("Spacer" SP) angebracht, die senkrecht zum Rohr WR stehen und Stützstege enthalten. Diese Stützstege bilden ein Gitter mit Maschen, das z.B. aus miteinander verschweißten Hülsen oder aus einander senkrecht durchsetzenden Längsstegen und Querstegen gebildet sein kann. An diesen Stegen sind eine Vielzahl von Brennstäben FR abgestützt, die jeweils zum Kasten parallel sind, die Maschen mehrere Abstandhalter durchsetzen und unten und oben Verschlußkappen FRa, FRb tragen.

Der Brennelement-Kopf HD besitzt eine Deckplatte 6, die den Brennelement-Kasten WC oben abdeckt und Kühlmittel-Auslässe 7 aufweist. An der Oberseite der Deckplatte ist ein Griff 9 angeordnet, wobei Deckplatte 6, Griff 9 und oberes Endstück WRb des Kühlmittelrohres über ein als Anschlagkörper ausgebildetes Verbindungsteil 8 aneinander gehalten sind.

Die Brennstäbe FR sind dabei im wesentlichen in den Maschen der Abstandhalter festgeklemmt, die Bodenplatte 1 und Deckplatte 6 dienen nur als Anschläge, die größere axiale Bewegung der Stäbe verhindern. Daher tragen die Verschlußkappen der Brennstäbe keine Gewinde, mit denen sie an den Platten verschraubt sind.

Vielmehr stehen die Brennstäbe mit ihren unteren Verschlußkappen auf der Bodenplatte auf und sind auch mit den oberen Verschlußkappen nur lose in entsprechenden Aufnahmepositionen an der Deckplatte geführt.

Das Brennelement enthält also im wesentlichen einen ein Bündel zueinander paralleler Brennstäbe seitlich umgebenden, oben und unten offenen Brennelement-Kasten, einer mit Kühlmittelauslässen versehenen Deckplatte zum Abdecken des oberen Randes des Brennelement-Kastens und einem Fußteil, das zunächst weiter betrachtet wird. Dieses Fußteil enthält ein Übergangsstück, das mit seinem oberen Rand in das offene untere Ende des Brennelementkastens eingesetzt ist, wobei an diesem oberen Rand des Übergangsstücks eine Bodenplatte angesetzt ist, die den Querschnitt des offenen unteren Endes des Brennelementkastens (und damit das obere Ende des Übergangsstücks) abdeckt und Kühlmittel-Einlässe enthält.

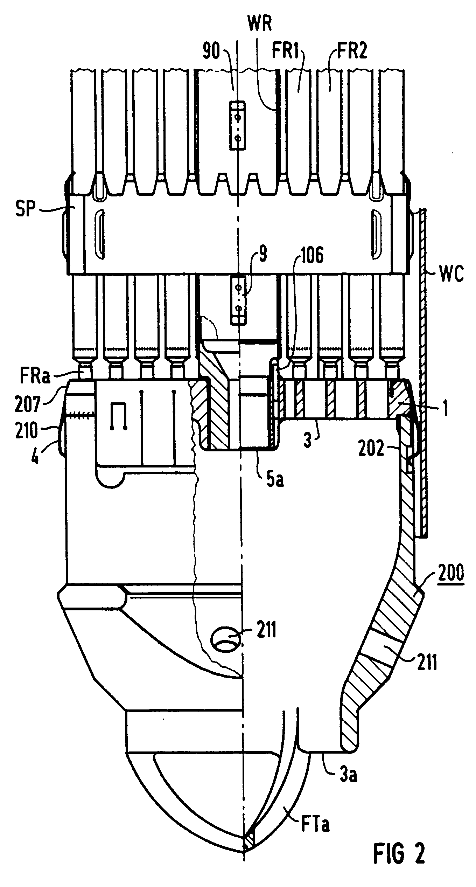

Figur 2 zeigt einen Strömungskanal, der von der Eintrittsöffnung 3a bei den Bügeln FTa zu den Kühlmitteleinlässen 3 in der Bodenplatte 1 und zur unteren Öffnung 5a des Wasserrohres WR führt. Er ist seitlich umgeben vom Übergangsstück 200, dessen oberer Rand 202 in das offene untere Ende des Brennelementkastens WC von unten eingesetzt ist. Die Bodenplatte 1, die die Kühlmittel-Einlässe 3 trägt, ist an den oberen Rand 202 des Übergangsstücks angesetzt und deckt die untere Öffnung des Brennelementkastens ab. Dabei entsteht eine Kante 207, die an der Innenseite des unteren offenen Endes des Brennelementkastens entlang läuft.

Eine langgestreckte Dichtfeder 4 erstreckt sich ungefähr parallel zur Kante und besitzt eine Wölbung, die um die Kante 207 herumgebogen, auf den Brennelementkasten gerichtet und dort abgestützt ist. Derartige Dichtfedern dienen zur Stabilisierung der Strömung durch das Brennelement und verhindern weitgehend, daß sich der im Brennelement aufbauende Überdruck über einen Bypass zwischen Fußteil und Kasten ausgleichen kann. Auch mehrere seitlich durch das Übergangsstück herausführende Öffnungen 211 dienen der Strömungsstabilisierung.

Anstelle eines einteiligen Gußstücks nach dem Stand der Technik sind hier zwei Einzelteile vorgesehen: das gegossene Übergangsstück und die z.B. ebenfalls gegossene oder aus einem Blech ausgestanzte Bodenplatte, die an den oberen Rand 202 des Übergangsstücks angesetzt und dort über eine Schweißnaht 210 angeschweißt ist.

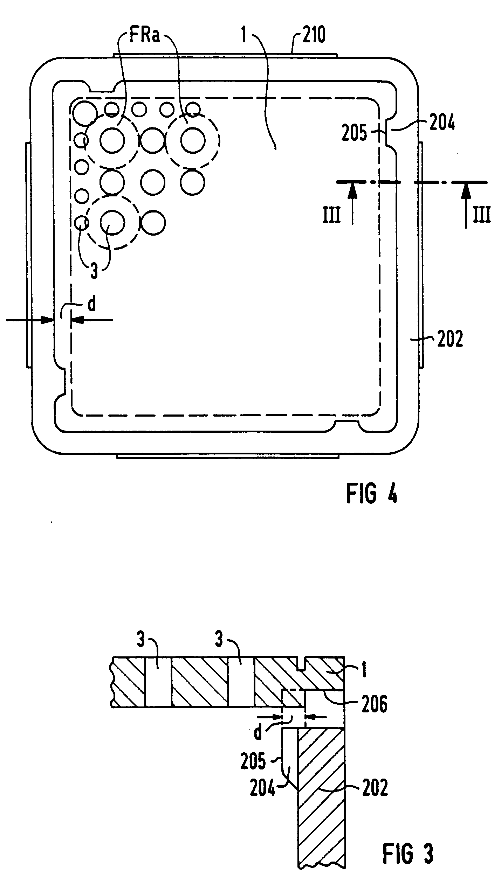

Vorteilhaft besitzt die Bodenplatte und/oder der obere Rand des Übergangsstücks ein Profil, so daß die Bodenplatte über dieses Profil in den oberen Rand des Übergangsstücks eingreift. Dies ist in Figur 3 gezeigt, wo die Bodenplatte auf ihrer dem Übergangsstück zugewandten Unterseite eine umlaufende Paß-Nut 206 besitzt, in der der obere Rand 202 des Übergangsstücks eingreift.

Figur 3 läßt erkennen, daß diese Nut 206 mit dem eingreifenden Rand 202 einen zum Strömungskanal hin offenen Spalt d bildet. Der obere Rand des Übergangsstücks weist dabei mehrere in den Spalt vorspringende Nasen 204 auf, die mit einer Paßfläche 205 an der Bodenplatte anliegen. Die Paßfläche 205 und die Paß-Nut 206 können dabei durch nachträgliche Bearbeitung der vorgefertigten Teile 1 und 200 erzeugt werden. Es ist daher möglich, bei einem Design-Wechsel des Brennelementes die Gußform für das Übergangsstück beizubehalten und nur die Bodenplatten auszuwechseln, wobei die Maßgenauigkeit durch nachträgliche Überarbeitung erreichbar ist.

Wie Fig. 4 zeigt, ist insbesondere bei einem Brennelement mit quadratischem Kasten, quadratischer Bodenplatte und einem in einen quadratischen Außenquerschnitt übergehenden Übergangsstück vorteilhaft vorgesehen, an jeder der vier Seitenflächen des Übergangsstücks nur eine in den Spalt d vorspringende Nase vorzusehen.

Diese Nasen können aber auch ganz weggelassen werden. Die Bodenplatte sitzt dann zunächst nur mit einem erheblichen, durch die Spaltbreite d gegebenen seitlichen Spiel am oberen Rand des Übergangsstücks. Ein maßgenauer Sitz kann trotzdem erreicht werden, wenn die beiden Teile beim Verschweißen durch ein entsprechendes Haltewerkzeug in der gewünschten Relativposition zueinander fixiert werden.

Figur 4 zeigt den oberen Rand 202 mit den Nasen 204 sowie die Bodenplatte 1 und die beide Teile miteinander verbindende Schweißnaht 210. Dabei tragen die Seitenflächen der viereckigen Bodenplatte und des viereckigen Übergangsstücks jeweils nur in ihren mittleren Teilen die Schweißnaht 210, die an der dem Brennelementkasten zugewandten Außenseite des Fußteils aufgebracht ist. An den abgerundeten Ecken braucht also keine Schweißnaht zu verlaufen.

Figur 4 zeigt ferner, daß die Bodenplatte 1 siebförmig von den Kühlmitteleinlässen durchsetzt ist. Diese Einlässe sind so geformt, daß an ihnen im Kühlmittel mitgeführte Fremdkörper (z.B. abgebrochene Federteile, Schrauben, Metallspäne) zurückgehalten werden, falls sie vorgegebene Abmessungen überschreiten. Diese vorgegebenen Abmessungen ergeben sich aus der Geometrie der Abstandhalter SP und sind so gewählt, daß Fremdkörper, die sich zwischen den Brennstäben und den Stegen der Abstandhalter in den Abstandhalter-Maschen verfangen können, bereits an der Bodenplatte zurückgehalten werden.

Mit durchbrochenen Linien sind in Figur 4 die Konturen der Brennstäbe FR des Brennelementes angedeutet. Die Kühlmitteleinlässe in der Bodenplatte 1 sind vorteilhaft so gewählt, daß möglichst viele dieser Einlässe in die Zwischenräume zwischen den Brennstäben münden. Die Einlaßöffnungen 3 können dabei als praktisch gleichmäßig über die Bodenplatte verteilte, gleich große Bohrungen ausgeführt sein, wobei es aber vorteilhaft sein kann, an besonderen Stellen, z.B. am Rand der Bodenplatte und/oder in der Nähe des Kühlmittelrohrs WR eine größere Anzahl kleinerer, zusätzlicher Bohrungen vorzusehen.

Im Stand der Technik weisen die Brennstäbe FR untere Endkappen FRa auf, die in entsprechende Bohrungen der Bodenplatte eingreifen und dort teilweise verschraubt sind. Die Dichtfedern 4 tragen dabei an einem um die Kante 207 gebogenen Seitenteil entsprechende Öffnungen, durch die diese unteren Endkappen der Brennstäbe greifen, um die Feder an der Bodenplatte festzuhalten. Nach Entfernen der Brennstäbe verlieren diese Federn ihren Halt und können abfallen. Sind die Endkappen FRa der Brennstäbe nicht in entsprechenden Öffnungen der Bodenplatte gehalten (z.B. weil sie auch im fertig montierten Zustand bereits oberhalb der Bodenplatte enden), so sind derartige Federkonstruktionen nicht verwendbar.

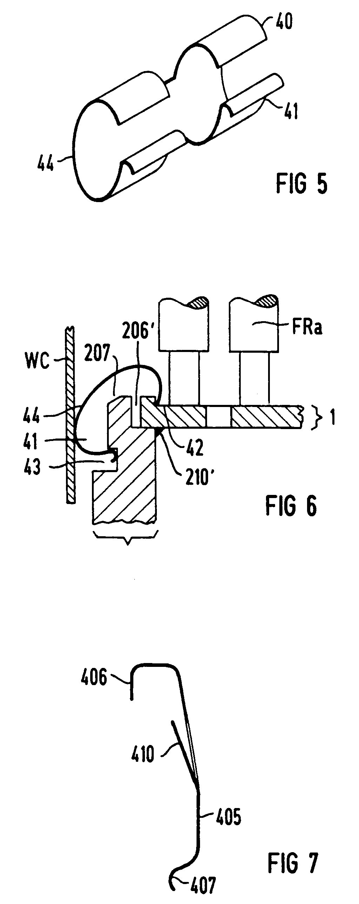

Daher ist eine Dichtfeder vorgesehen, deren Prinzip in Figur 5 dargestellt ist und die an das Fußteil angeklippt ist.

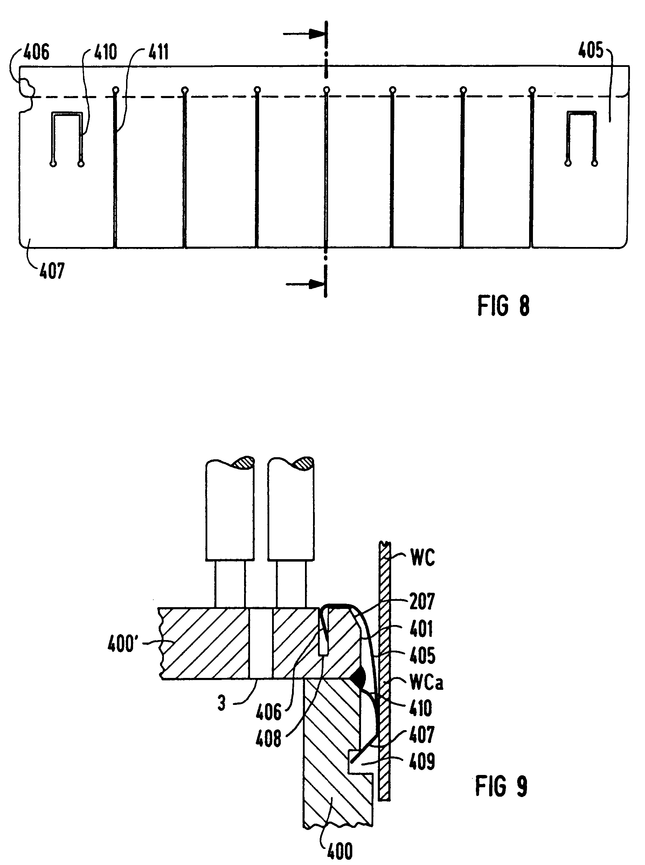

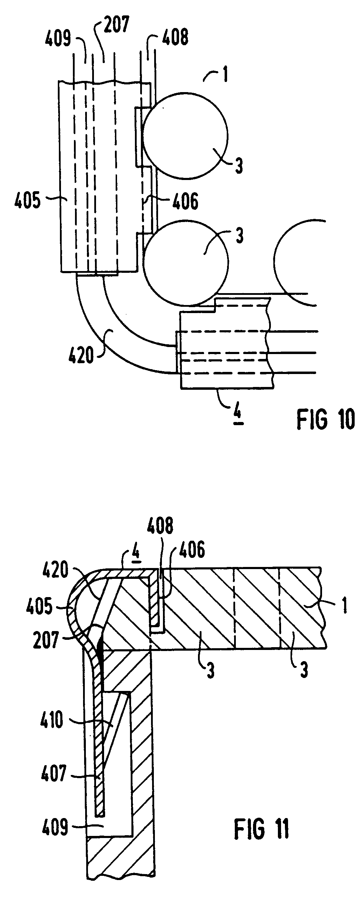

Diese Dichtfeder besitzt ein Mittelteil, das sich zwischen dem oberen Rand des Übergangsstücks und dem Brennelementkasten erstreckt und um eine zur Kante 207 parallele Krümmungslinie gewölbt ist. Dieses Mittelteil 44 ist gegen die Innenfläche des Brennelementkastens WC abgestützt. Um diese Dichtfeder an das Fußteil anzuklipsen, ist nach den Figuren 5 bis 9 unterhalb des Mittelteils ein erster, in eine Profilnut (Position 409 in Figur 9 und Position 43 in Figur 6) eingerasteter Seitenstreifen 41 vorgesehen. Nach den Figuren 10 bis 14 kann dieser erste, in die Profilkante einrastende Seitenstreifen die Form seitlich vom Mittelteil vorspringender Laschen haben. Oberhalb des Mittelteils ist ein zweiter Seitenstreifen 40 vorgesehen, der die Kante 207 umgreift und an der dem Brennstabbündel zugewandten Außenfläche der Bodenplatte 1 anliegt. Insbesondere kann dieser zweite Seitenstreifen 40 einen krallenförmig gebogenen Rand aufweisen, der in ein Halteprofil (in Fig. 6 die Profilkante 42) an der Außenfläche der Bodenplatte eingreift.

Figur 6 zeigt dabei zusätzlich, daß auch - abweichend von Fig. 2 und 3 - die Paß-Nut 206′ zum Einsetzen der Bodenplatte am oberen Rand des Übergangsstücks eingearbeitet sein kann. Auch hier braucht die Bodenplatte nicht paßgenau gearbeitet zu sein, vielmehr genügt es, wenn sie mit einem seitlichen Spiel (d.h. also etwa senkrecht zu den Brennstäben beweglich) an den oberen Rand des Übergangsstücks angesetzt ist. Ihre maßgenaue Position wird dann erst beim Verschweißen durch die Schweißnaht 210′ festgelegt.

Figur 7 zeigt eine bevorzugte Ausführungsform der angeklipsten Dichtfeder 4 mit einem gewölbten Mittelteil 405, einem S-förmigen ersten Seitenstreifen 407 und einem hufeisenförmig gebogenen zweiten Seitenstreifen 406.

Figur 8 zeigt eine Draufsicht auf die langgestreckte Feder, deren Mittelteil 405 und erster Seitenstreifen 407 Querschlitze 411 aufweisen, die also parallel zu den Brennstäben ausgerichtet sind. Dadurch entstehen federnde Finger, die an den zweiten Seitenstreifen 406 angesetzt sind.

In Figur 9 ist die Befestigung einer derartigen Feder am Fußteil dargestellt. Während der zweite Seitenstreifen 406 in den zur Kante ungefähr parallelen Schlitz 408 eingreift, der als Halteprofil dient, trägt das Übergangsstück eine unterhalb der Kante außen um das Fußteil herumlaufende Profilnut 409, in die der erste Seitenstreifen 407 einrastet.

Ferner trägt der Mittelteil Sperrlappen 410, die in Richtung auf die Bodenplatte und den zweiten Seitenstreifen gebogen und an einem Seitenprofil des Fußteils abgestützt sind. In Figur 9 ist diese Seitenprofil von der Schweißnaht zwischen Bodenplatte und Übergangsstück gebildet, wobei in diesem Fall die Bodenplatte 400′ stumpf auf dem oberen Rand des Übergangsstückes 400 aufgesetzt ist, also ebenfalls ein seitliches Spiel hat und erst durch die Schweißnaht maßgenau positioniert wird.

In der Regel weist der Brennelementkasten einen praktisch quadratischen oder zumindest polygonalen Querschnitt auf, an den das Fußteil angepaßt ist. Das Fußteil besitzt also ebene Seitenflächen und abgerundete Ecken. Figur 10 und 11 zeigen, daß dann auch die Dichtfeder aus jeweils einer Teilfeder für jede Seitenfläche mit jeweils einem gewölbten Mittelteil und daran anschließenden Seitenstreifen besteht.

In Figur 10 sind die Teilfedern teilweise weggebrochen, um den Schlitz 408 erkennbar zu machen, der für den krallenförmigen zweiten Seitenstreifen 406 als Halteprofil in der Bodenplatte dient. Dieser Schlitz 408 verläuft parallel zur Kante 207 des Fußteils, braucht sich aber nicht um die abgerundeten Ecken 420 herum zu erstrecken. Er kann aus Platzgründen so nahe an die Kühlmitteleinlässe 3 herangerückt werden, daß er diese verbindet, insbesondere tangential in derartige Durchlässe mündet.

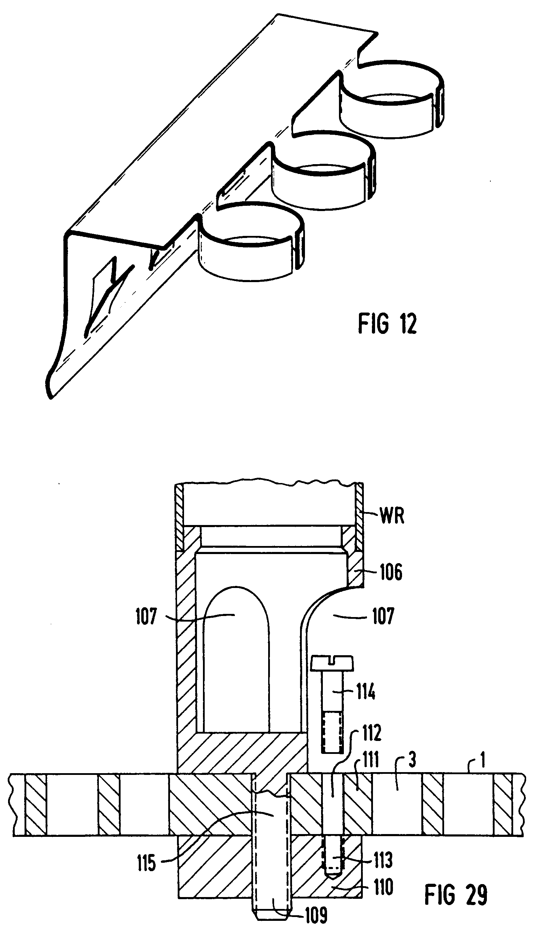

Figur 11 zeigt einen Querschnitt durch das Fußteil mit den abgerundeten Ecken 420, der Kante 207, und der Profilnut 409, die außen praktisch um das Fußteil unterhalb der Kante herumläuft, d.h. sich wenigstens außerhalb der abgerundeten Ecken 420 über die Seitenflächen des Fußteils erstreckt, und in die Sperrlappen 410 des ersten Seitenstreifens 407 eingreifen. Nach den Figuren 12 bis 14 trägt der gewölbte Mittelteil die erwähnten Sperrlappen 410, die ebenfalls in Richtung auf die Bodenplatte 1 und den zweiten Seitenstreifen 406 gebogen und an einem Seitenprofil des Fußteils abgestützt sind.

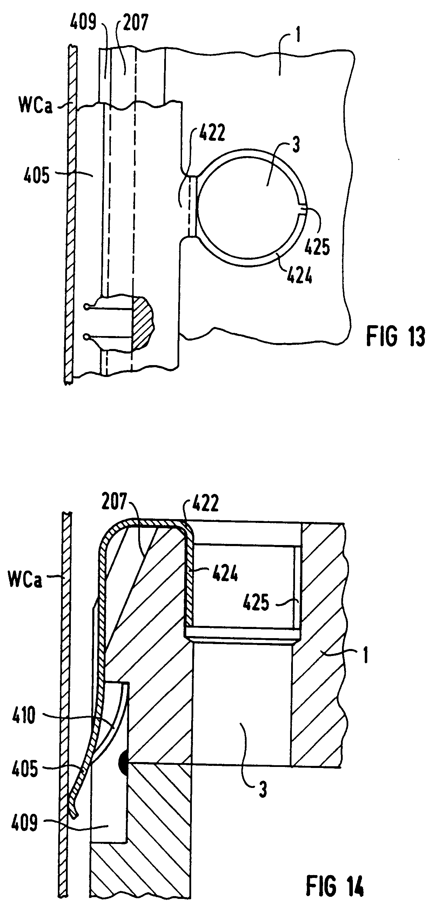

Auch die Dichtfeder nach Figur 13 zeigt einen Mittelteil 405 und daran anschließende erste und zweite Seitenstreifen 421 und 422, wobei der oberhalb des Mittelteils angeordnete, zweite Seitenstreifen die Kante 207 umgreift. Dieser zweite Seitenstreifen umfaßt aber auch wenigstens einen der Kühlmitteldurchlässe 3 und ist dort mittels einer in den Kühlmitteldurchlaß eingesetzten Hülse festgeklemmt. In den Figuren 13 und 14 umschließt die Hülse 424 den Kühlmitteleinlaß nur bis auf einen Längsschlitz 425, wobei die Hülse 424 elastisch ist und nur durch Zusammendrücken in den Kühlmitteleinlaß 3 eingesetzt werden kann. Diese elastische Hülse 224 ist an den zweiten Seitenstreifen angeformt.

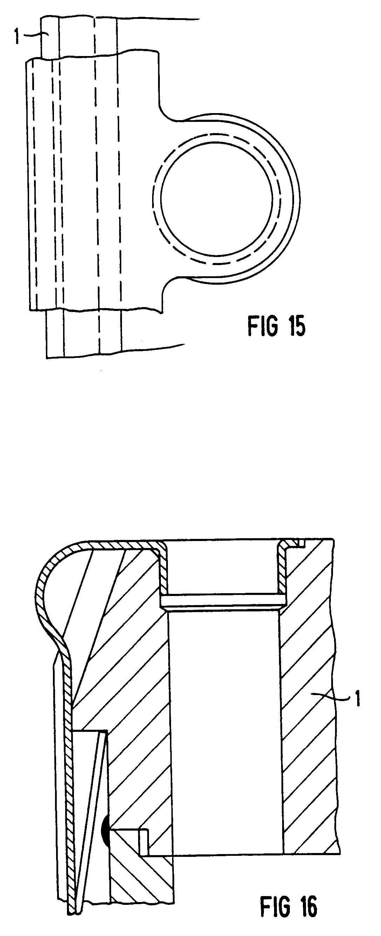

In den Figuren 15 und 16 ist diese Hülse ebenfalls zylindrisch ausgebildet; sie läuft um den ganzen Kühlmittel-Einlaß herum. Ebenso kann sie aber auch sich nach oben konisch öffnen und in einen entsprechend erweiterten konischen Teil des Kühlmitteleinlasses eingesetzt werden.

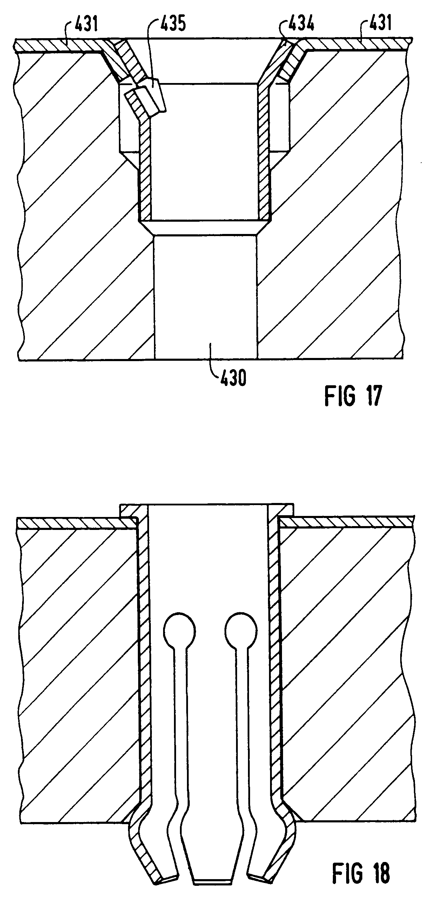

Eine den Figuren 12 bis 16 ähnliche Klemmverbindung zeigt die Ausführungsform nach Figur 17, bei der der erste Seitenstreifen 431 ebenfalls einen entsprechenden Kühlmitteleinlaß 430 teilweise oder ganz umfaßt. Die Klemmenverbindung ist alternativ oder zusätzlich zu einer Ausbildung der Feder vorgesehen, die eine Halterung der Dichtfeder durch Anklipsen am Fußteil ermöglicht.

Als Klemmverbindung dient z.B. eine Hülse 434, die z.B. mittels eines U-förmigen Schlitzes 435 elastisch ausgebildet sein kann. Jedoch ist diese Hülse in diesem Fall als eigenes Bauteil ausgeführt, um die Feder am Fußteil, nämlich am Kühlmitteldurchlaß 430, festzuklemmen.

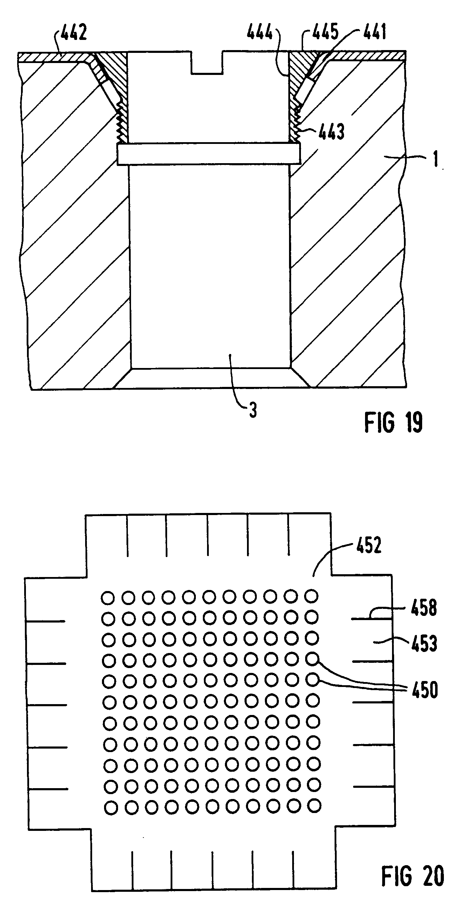

Figur 18 zeigt eine andere Ausbildung dieser Klemmvorrichtung durch eine in den Kühlmitteleinlaß eingesetzte Hülse. Insbesondere kann auch eine Hülse 444 (Figur 19) verwendet werden, die ein in den Kühlmitteleinlaß 3 eingeschraubtes Außengewinde 443 und ein auf der dem Brennstabbündel zugewandten Außenfläche der Bodenplatte 1 herausragendes Ende 445 besitzt, das den den Kühlmitteldurchlaß 3 umfassenden Seitenstreifen 441 übergreift.

Vorteilhaft können bei diesen Ausführungen der Dichtfeder aus Teilfedern die zweiten Seitenstreifen der Teilfedern, die gegenüberliegenden Seitenflächen zugeordnet sind, miteinander verbunden sein. Dies zeigt Figur 20, wo die miteinander verbundenen Seitenstreifen eine Platte 452 bilden.

Die miteinander verbundenen Seitenstreifen weisen dabei Aussparungen 450 auf, die die Kühlmitteldurchlässe möglichst vollständig freigeben. Auch hier weisen die Mittelteile 453 und die entsprechenden ersten Seitenteile Schlitze 458 auf, die quer zum Mittelteil, also ungefähr parallel zu den Brennstäben verlaufen.

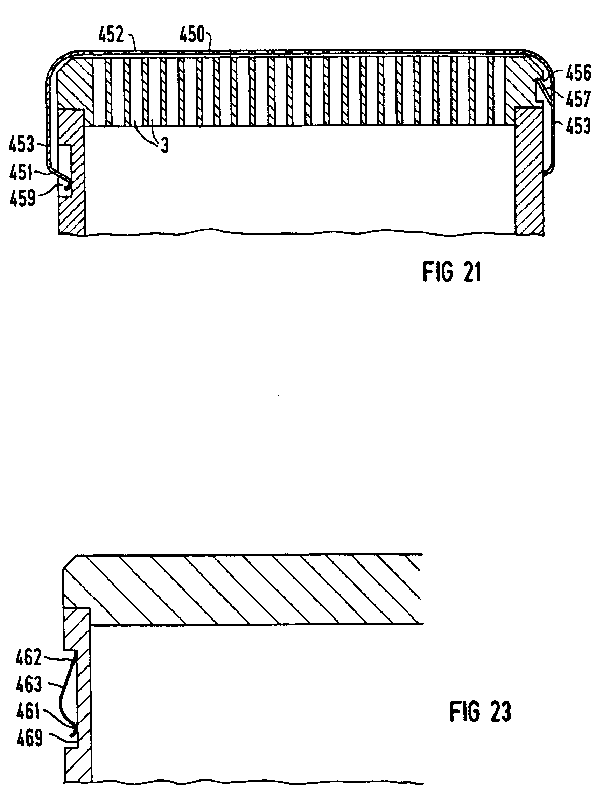

Dabei können die zweiten Seitenteile ebenfalls, wie in den Figuren 13 bis 19 gezeigt, an der Bodenplatte festgeklemmt sein und/oder am Fußteil anklippbar sein. Im linken Teil der Figur 21 ist zum Anklipsen der erste Seitenstreifen S-förmig ausgebildet. Er greift in eine Profilnut 459 an der Seitenfläche des Fußteils ein, an dem er vorteilhaft auch abgestützt ist. Im rechten Teil der Figur 21 wird der erste Seitenstreifen von Sperrlappen 457 gebildet, die in ein entsprechendes Seitenprofil 456 des Fußteils eingreifen.

Während in Figur 21 die Platte 452 von den zweiten Seitenteilen gebildet werden, also die gesamte Dichtfeder einteilig gefertigt ist, zeigt Figur 22 eine Ausführung, bei der die zweiten Seitenstreifen 455 über eine angenietete oder anderweitig befestigte Platte 454 miteinander verbunden sind.

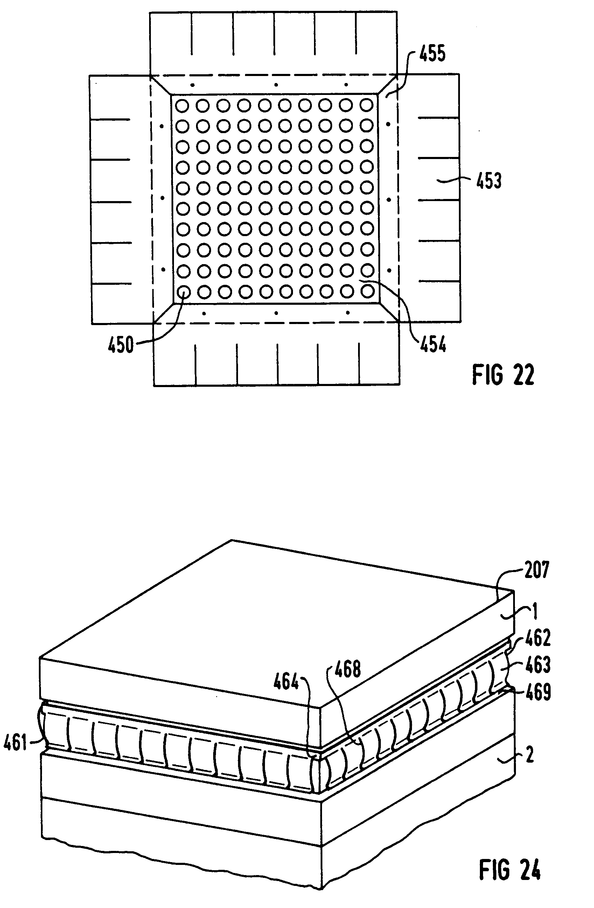

Figur 23 und Figur 24 zeigen eine andere Ausführung einer Dichtfeder, bei der die Bodenplatte 1 und/oder das Übergangsstück 2 (also das Fußteil) eine unterhalb der Kante 207 außen herumlaufende Profilnut 469 aufweist. Die Dichtfeder besitzt unterhalb und oberhalb des gewölbten und am Brennelementkasten abgestützten Mittelteils 463 einen ersten bzw. zweiten am Fußteil abgestützten Seitenstreifen 461 bzw. 462 und ist bandförmig ausgebildet. Dieses Federband ist in die Profilnut 469 eingelegt, wobei sich die Enden 464 des Federbandes überlappen oder praktisch aneinanderstoßen. Dabei ist die Profilnut 469 vorteilhaft in sich geschlossen, d.h. läuft um das gesamte Fußteil herum. Die Enden 464 des Bandes können insbesondere aneinander befestigt sein, so daß ein in sich geschlossenes Federband entsteht, das unverlierbar in der Profilnut sitzt. Auch hierbei ist vorteilhaft, wenn der Mittelteil und der erste Seitenstreifen entsprechende Schlitze 468 tragen, durch die am zweiten Seitenstreifen 462 anschließende Federfinger gebildet werden. Der erste Seitenstreifen selbst ist vorteilhaft S-förmig ausgebildet, wie Figur 23 erkennen läßt. Weist der Brennelementkasten einen eckigen Innenquerschnitt an seinem unteren offene Ende auf und trägt das Fußteil daran angepaßte ebene Seitenfläche, wie dies Figur 24 zeigt, so erstrecken sich vorteilhaft der Mittelteil 463 und der erste Seitenstreifen 461 jeweils nur über diese Seitenflächendes Fußteils, ohne um die Ecken, die von aneinanderstoßenden Seitenflächen gebildet werden, herumzulaufen.

Selbstverständlich können diese Federformen nicht nur bei zweiteiligen Fußteilen, sondern auch bei einteilig gefertigten Fußteilen angewendet werden.

Wie bereits eingangs erwähnt wurde, weist ein Brennelement für einen Siedewasserreaktor häufig ein zwischen den Brennstäben des Stabbündels angeordnetes, zu diesen Brennstäben paralleles Kühlmittelrohr mit einem eine Öffnung für das Kühlmittel aufweisenden unteren Enstück auf. Dieses Kühlmittelrohr kann als wesentliches tragendes Element des Brennelement-Skelettes benutzt werden, wobei einerseits eine kraftschlüssige, lösbare Verbindung zwischen der Deckplatte und einem oberen Endstück des Kühlmittelrohres und eine sichere, kraftschlüssige Verbindung des unteren Endstückes mit der Bodenplatte vorgesehen ist.

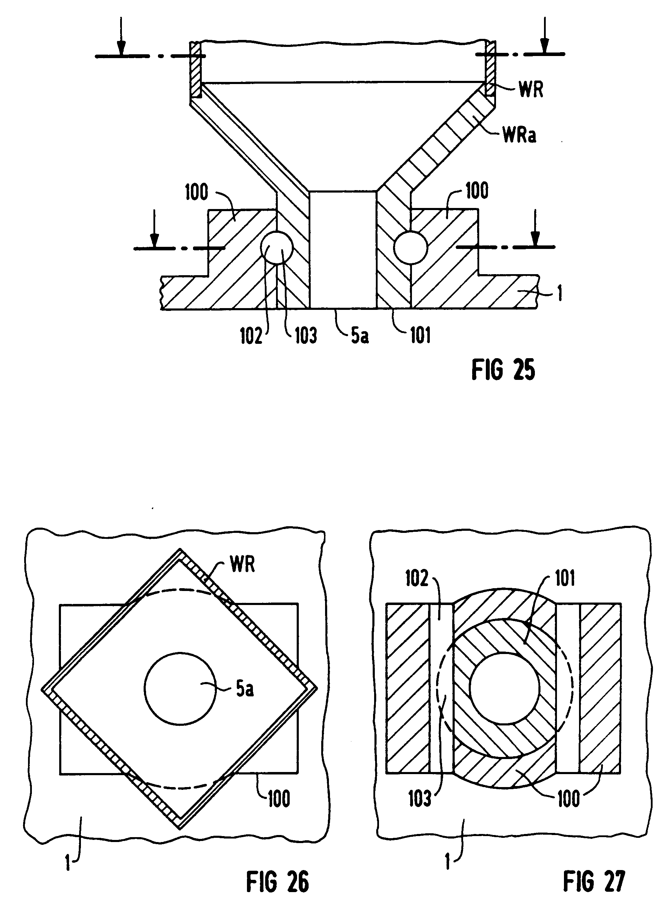

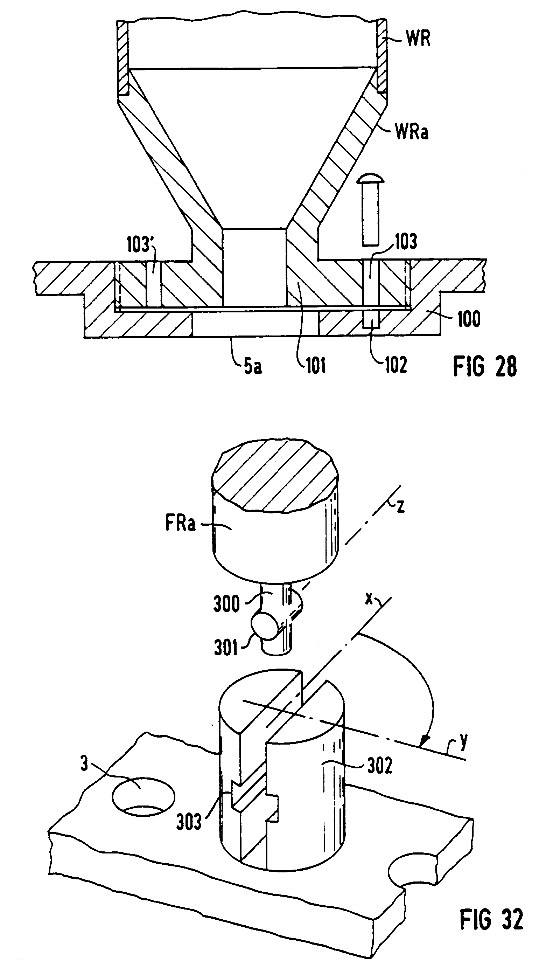

Eine derartige Verbindung zwischen entsprechenden Teilen der Bodenplatte 1 und des unteren Endstücks WRa des Kühlmittelrohres WR zeigen die Figuren 25, 26 und 27, bei dem Enstück und Bodenplatte jeweils mindestens ein Verbindungsteil mit aneinander angepaßten, eine lösbare Verbindung von Endstück und Bodenplatte bildenden Profilen aufweisen. Diese lösbare Verbindung ist durch einen in beide Verbindungsteile eingreifenden Sicherungsbolzen verriegelt. Hierzu dienen entsprechende Aussparungen 102 und 103 in den beiden Verbindungsteilen, in die der Sicherungsbolzen einsetzbar ist. Die beiden Verbindungsteile können dabei ineinandergesteckt (Figur 25) und/oder miteinander verschraubt (Figur 28) sein.

Vorteilhaft ist dabei das Verbindungsteil in eine Bohrung der Bodenplatte eingesetzt und/oder eingeschraubt und die Öffnung des Kühlmittelrohres führt durch das Endstück und die Bohrung hindurch auf die dem Brennstab-Bündel abgewandte Unterseite der Bodenplatte, um eine große Öffnung 5a für den ungehinderten Eintritt des Kühlmittels in das Kühlmittelrohr WR zu ermöglichen.

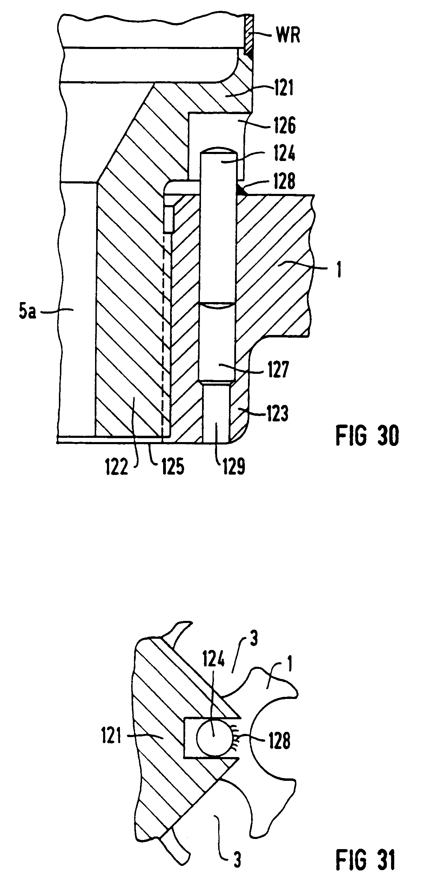

Prinzipiell ist es nicht erforderlich, das Endstück mit seinem Verbindungsteil einstückig auszubilden. Zum Beispiel kann nach Figur 29 das Endstück 106 mit seitlichen Öffnungen 107 versehen sein und einen nach unten vorspringenden Zapfen 109 tragen, der in einer Bohrung 115 in einem Teilstück 111 der Bodenplatte 1 geführt ist und der an seinem unteren Ende ein Gewinde für die Mutter 110 zeigt, wodurch ebenfalls eine kraftschlüssige Verbindung zwischen dem Kühlmittelrohr WR und seinem Endstück einerseits und der Bodenplatte 1 andererseits erreicht wird. Die Mutter 110 und das Teilstück 111 tragen die Aussparungen 112 und 113, die im fertig montierten Zustand einen Aufnahmekanal bilden, in dem der Bolzen 114 eingesetzt werden kann. In diesem Fall ist der Bolzen 114 über ein Gewinde an seinem unteren Ende in der Aussparung 113 der Mutter 110 gehalten.

In den - relativ seltenen - Fällen, in denen die Bodenplatte vom Kühlmittelrohr abgenommen werden muß, stört auch ein Festsitzen der Schraubverbindungen nicht sehr, da die kraftschlüssige Verbindung durch Aufbohren der Mutter gelöst werden kann. Für eine erneute Verwendung des Kühlmittelrohres braucht lediglich die Mutter 110 und der Bolzen 114 ersetzt zu werden.

Vorteilhaft sind die benötigten Verbindungsteile jedoch an die Bodenplatte 1 bzw. das Endstück 106 angeformt.

In Figur 30 ist das zwischen den Brennstäben des Stabbündels angeordnete, zu den Stäben ungefähr parallele Kühlmittelrohr WR mit einem unteren Endstück 121 verschweißt, das ein Verbindungsteil in Form eines angeformten, das Kühlmittelrohr durch eine Bohrung in der Bodenplatte verlängernden Rohrstückes 122 trägt. Auch der Bodenplatte ist ein Verbindungsstück zugeordnet, nämlich das angeformte Teilstück 123, das die Bohrung 125 trägt. Die beiden Verbindungsteile 122 und 123 weisen ein Profil auf, das eine lösbare Verbindung von Endstück und Bodenplatte bildet und in diesem Fall als Gewinde ausgeführt ist. Diese lösbare Verbindung ist durch einen Sicherungsbolzen 124 verriegelt.

Dieser Sicherungsbolzen 124 ist zunächst lösbar in entsprechende Aussparungen 126, 127 der beiden Verriegelungsstücke 122 und 123 eingesetzt. Nach dem Einsetzen ist der Bolzen an wenigstens einen der Verbindungsteile fixiert, wie der Schweißpunkt 128 andeutet.

Dadurch wird eine besonders vorteilhafte, drehsichere Befestigung erreicht, die leicht montierbar und demontierbar ist. So kann zum Montieren die Bodenplatte 1 soweit auf das untere Endstück 121 aufgeschraubt werden, bis ein vorgegebener Abstand von einem oberen Endstück des Kühlmittelrohres ungefähr erreicht ist. Anschließend werden diese beiden Teile noch so weit gedreht, bis die Aussparungen 126 und 127 (bzw. die Aussparung 102 und eine der Aussparungen 103 und 103′ der Fig. 28) einen Aufnahmekanal für den Sicherungsbolzen bilden, in dem dieser einsetzbar ist. Dabei kann vorteilhaft der Bolzen bereits vor dem Verriegeln der lösbaren Verbindung in nur einer der beiden Aussparungen gehalten sein, also z.B. ganz in der Aussparung 127 sitzen. Zum Verriegeln wird er dann teilweise in die andere Aussparung hineingeschoben, wozu in Figur 30 ein zum Kühlmittelrohr ungefähr paralleler, in die Aussparung 127 mündender Stichkanal 129 vorgesehen ist, durch den ein Werkzeug zum Anheben des Sicherungsbolzens eingeführt werden kann.

Zum Demontieren braucht dann nur der aus der Aussparung 127 herausragende Teil des Sicherungsbolzen mit dem Schweißpunkt 128 abgeschnitten zu werden.

Nach dem gleichen Prinzip können auch die Endstücke anderer Stäbe des Stabbündels eines Brennelementes, also z.B. die unteren Verschlußkappen von Brennstäben an der Bodenplatte befestigt werden. Auch Druckwasserreaktoren, deren Stabbündel neben zueinander parallelen Brennstäben auch Führungsrohre mit unteren Endstücken enthalten, weisen eine das Bündel nach oben abdeckende Deckplatte mit Kühlmittelauslässen und eine das Bündel nach unten abdeckende Bodenplatte mit Kühlmitteleinlässen auf. Auch hier können die Endstücke eines derartigen Stabes, also die Enden eines Führungsrohres und/oder die unteren Verschlußkappen von Brennstäben auf ähnliche Weise an der Bodenplatte befestigt werden.

Für eine derartige Befestigung weist also die Bodenplatte und wenigstens das Endstück eines Stabes jeweils ein Verbindungsteil auf, wobei diese Verbindungsteile aneinander angepaßte, eine lösbare Verbindung bildende Profile besitzen. Das Endstück wird von oben in die Verbindung eingesetzt und/ oder eingedreht und ein Bolzen verhindert, daß der Stab mit seinem Endstück von der Bodenplatte abheben kann. Dabei ist vorteilhaft der Bolzen an einem der Verbindungsteile derart angeformt, daß die Verbindungsteile einen Bajonettverschluß bilden.

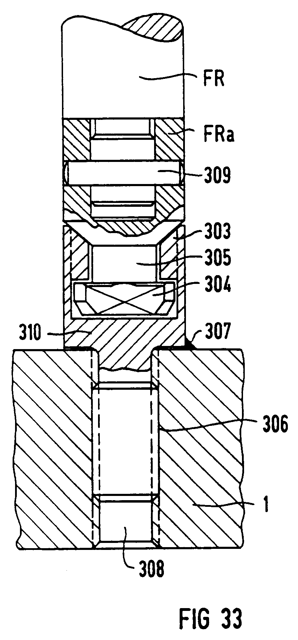

Figur 32 zeigt das Schema eines derartigen Bajonettverschlusses, wobei das Endstück, also z.B. die untere Endkappe FRa eines Brennstabes, ein nach unten vorspringendes, kreuzförmiges Verbindungsteil trägt, das in Richtung der Achse z ausgerichtet ist. In dieser Stellung kann dieses Verbindungsteil in ein entsprechendes, an der Bodenplatte angeformtes Verbindungsteil eingesetzt werden, das einen axialen Schlitz in x-Richtung und eine auf den Innenseiten des Schlitzes laufende Quernut besitzt. Wird nun die z-Achse von der x-Richtung in die y-Richtung gedreht, so kann der Brennstab in dieser Stellung nicht mehr von der Bodenplatte abgehoben werden.

Eine vorteilhafte Ausbildung eines derartigen Bajonettverschlusses zeigt Figur 33 mit einem Sockel, der z.B. mittels eines Stiftes 306 in eine entsprechende Bohrung 308 eingesetzt und z.B. dort eingschraubt ist. Der Sockel 310 kann an der Bodenplatte insbesondere unlösbar befestigt sein, wie durch den Schweißpunkt 307 dargestellt ist. Er bildet das eine der beiden Verbindungsteile.

Gegenüber einem an die Bodenplatte angeformten Verbindungsteil entsteht dadurch die Möglichkeit, die Bodenplatte aus einem Spezialstahl, insbesondere austenitischem Stahl, das Endstück FRa des Brennstabes FR aus Zirkonium oder einer Zirkoniumlegierung und den Sockel aus einem dritten Material zu fertigen, das gegenüber dem Endstück auch nach längeren Standzeiten im Reaktor weniger zu einem Festfressen oder Festbacken des Bajonettverschlusses neigt als ein aus dem Material der Bodenplatte gebildetes Verbindungsteil.

Das eine der beiden Verbindungsteile ist beim Ausführungsbeispiel der Figur 33 ein an der Endkappe nach unten vorspringender Dorn 305, an den der Bolzen als ein seitlicher Ansatz 304 angeformt ist. Das andere Verbindungsstück, nämlich der Sockel 310 weist wenigstens einen Backen 302 auf, der von dem Bolzen untergriffen wird, sobald das Endstück mit seinem Verbindungsteil 305 in eine entsprechende Öffnung des anderen Verbindungsteils (Sockel 310) eingesetzt und um die Längsachse des Stabes gedreht wird.

Vorteilhaft ist in das Endstück FRa ein Querstift 309 eingesetzt, der als eine Markierung dient, die die Stellung des Endstückes angibt.

Bei dem hier beschriebenen Brennelement eines Siedewasserreaktors sind Bodenplatte und Deckplatte am zentralen Kühlmittelrohr gehalten, ihr gegenseitiger Abstand also festgelegt. Am Kühlmittelrohr sind in vorgegebenen axialen Positionen Abstandhalter mit Stegen befestigt, die quer zu den Stäben angeordnet sind und Gittermaschen bilden, durch die die Brennstäbe geführt sind. Die Brennstäbe sind seitlich an den Gittermaschen abgestützt, in axialer Richtung können sie nur bewegt werden, bis sie an der Deckplatte oder Bodenplatte anstoßen. Bei Druckwasserreaktoren sind Bodenplatte, Deckplatte und Abstandhalter an Führungsrohren und Instrumentierungsrohren befestigt. In beiden Fällen kann es aber erwünscht sein, die Brennstäbe, die aus Brennstoff enthaltenden Hüllrohren bestehen, an ihren unteren Enden mit den Verschlußkappen exakt an der Bodenplatte zu positionieren, damit die Brennstoffüllung der Brennstäbe in einer gemeinsamen Ebene beginnt.

Diese Positionierung kann über die beschriebenen Bajonettverbindungen erreicht werden, wobei natürlich der den seitlichen Bolzen tragende Dorn auch vom der Bodenplatte zugeordneten Verbindungsteil und die entsprechenden Backen bzw. das entsprechende, hülsenförmige Gegenstück von der unteren Verschlußkappe des jeweiligen Brennstabs gebildet sein kann. Dabei kann der Bolzen statt am Dorn auch seitlich an der Innenfläche des hülsenartigen Gegenstücks angeformt sein.

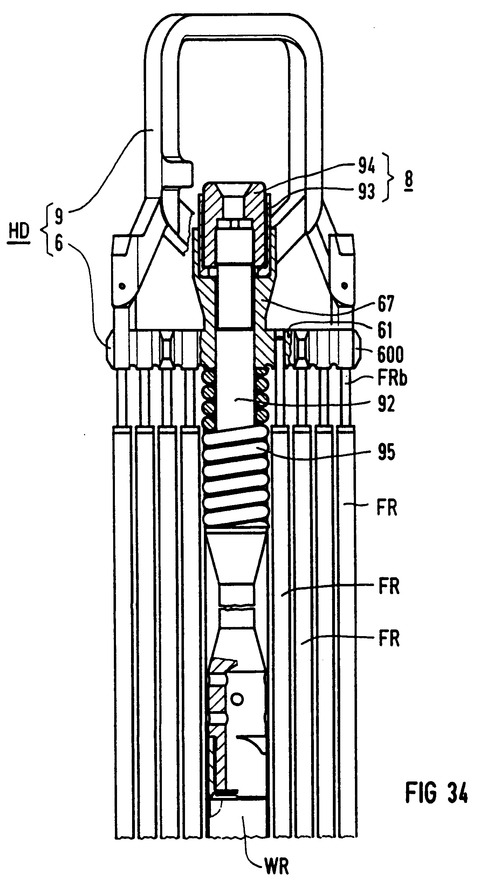

Figur 34 zeigt das obere Ende des Brennelementes mit einer Gruppe von Brennstäben FR, die auch an ihrem oberen Ende durch Verschlußkappen FRb abgeschlossen sind, die alle gewindelos ausgeführt sind und daher nur lose in Manschetten 61 an der Deckplatte 6 geführt sind. An der Deckplatte 6 ist der Griff 9 angeformt oder aufgesteckt, wobei ein zentrales Teil, z.B. in Form eines angeformten Kragens 67, vorgesehen ist, der an eine am oberen Ende des Kühlmittelrohres WR aufgeschraubte und in einer Kappe 93 gehaltene Zentralmutter 94 anschlägt. Über diese Zentralmutter 94, die damit das in Figur 1 gezeigte Verbindungsteil 8 darstellt, kann also das Brennelementskelett (insbesondere Deckplatte, Kühlmittelrohr, Abstandhalter und Bodenplatte) am Griff gehalten und angehoben werden, um z.B. das Brennelement in den Brennelementkasten einzuschieben und in den Reaktorkern einzusetzen. Hierzu ist das obere Endstück des Kühlmittelrohres WR als Steckbolzen 92 ausgebildet, der eine auf Druck beanspruchte Feder 95 trägt, um einen ausreichenden Spielraum für eine betriebsbedingte Längenänderung des Kühlmittelrohres zu ermöglichen.

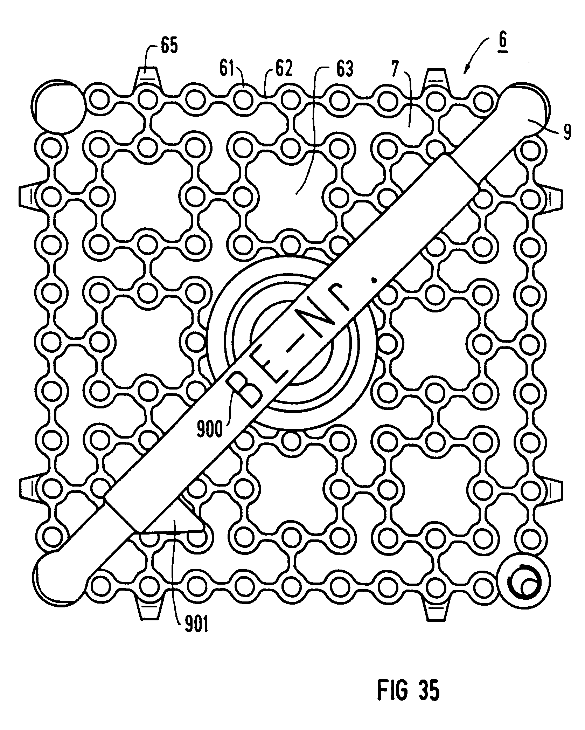

Figur 35 zeigt in der Aufsicht auf den Brennelementkopf, daß die Manschetten 61 über Verbindungsstege 62 miteinander verbunden sind und die Deckplatte bilden, die über seitliche Anlagewarzen 65 an der Innenseite des Brennelementkastens anliegt. Der Griff 9 trägt eine Markierung 900 zur Identifizierung des jeweiligen Brennelementes, während bei Brennelementen, die durch unterschiedliche Füllungen ihrer Brennstäbe unsymmetrisch aufgebaut sind, eine zweite Markierung 901 die Orientierung der eingesetzten Brennstäbe kennzeichnet.

Die Zwischenräume zwischen den Stegen und Manschetten dieser Deckplatte dienen als Auslaßöffnungen für das Kühlmittel, wobei aber an manchen Brennstab-Positionen die entsprechenden Manschetten fehlen und dadurch vergrößerte Auslaßöffnungen 63 entstehen.

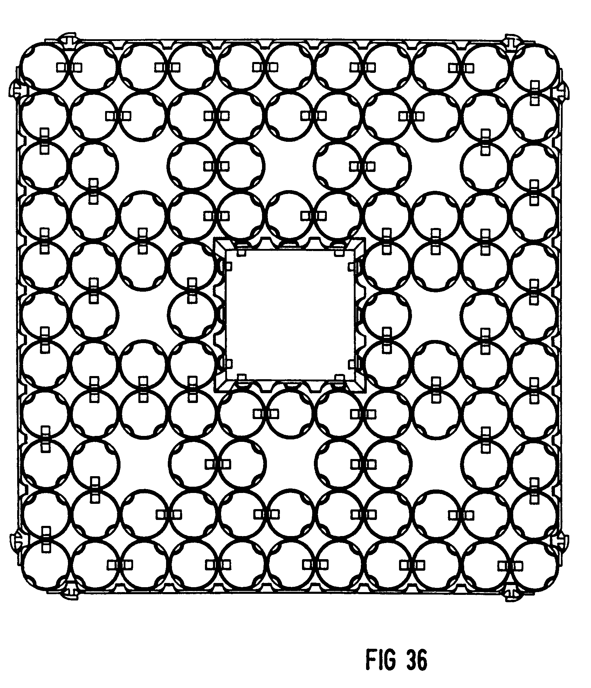

Durch diese vergrößerten Auslaßöffnungen fehlt also für die in diesen Brennstabpositionen sitzenden Brennstäbe der Anschlag für die axiale Bewegung der Brennstäbe. Die Gruppe der in diesen Positionen sitzenden Brennstäbe ist auf die in den Figuren 32 bis 34 gezeigte Weise an der Bodenplatte lösbar befestigt. Sie sind kürzer als die anderen Brennstäbe und enden bereits unterhalb des z.B. in Figur 36 gezeigten obersten Abstandhalters.

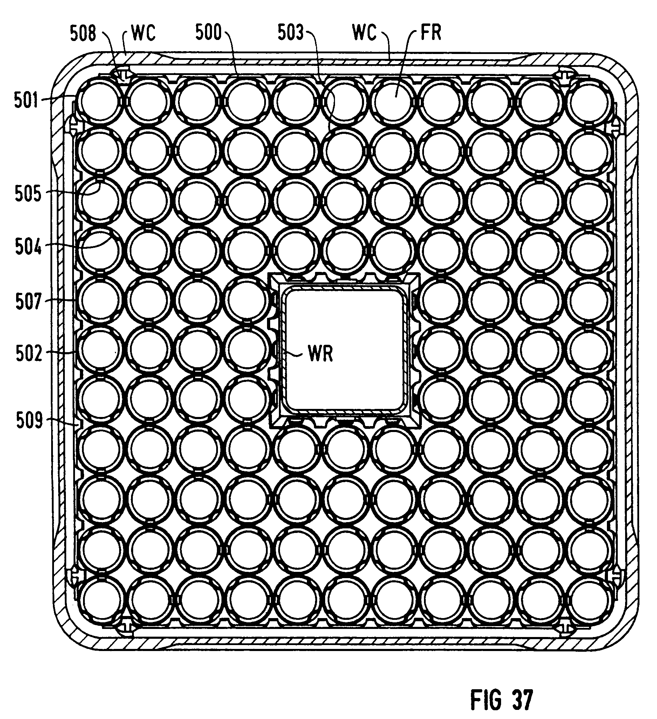

Der Vergleich der Figur 36 mit einem entsprechenden, darunterliegenden Abstandhalter nach Figur 37 zeigt, daß die Position dieser kürzeren Brennstäbe bei quadratischen Brennelementen vorzugsweise zumindest in den Diagonalen und/oder in solchen Reihen und Spalten der Gittermaschen liegen, daß sie jeweils durch einen langen Brennstab vom Rand des Brennelementes getrennt sind.

Entsprechend weisen Abstandhalter, deren Stege die Brennstäbe in Form von aneinandergeschweißten Hülsen umgeben, am Rand des Brennelementkastens WC eine Reihe von Randhülsen 502 und Eckhülsen 501 sowie weitere Reihen von Innenhülsen 503 auf, wobei in diesen Hülsen die Brennstäbe durch Stütznoppen 504 und Stützfedern 505 abgestützt sind. Diese Steghülsen oder Innenstege sind von Außenstegen 507 umgeben, wobei zur Verringerung des Strömungswiderstandes zwischen dem Abstandhalter und dem Brennelementkasten WC vorteilhaft vorgesehen ist, daß diese Außenstege 507 an den Ecken des Abstandhalters nur über Innenstege, also z.B. die Randhülsen 501, miteinander verbunden sind, so daß Abstandhalter mit "offenen Ecken" entstehen. Weitere Maßnahmen zur Verringerung des Strömungswiderstandes an den Abstandhaltern sind in der gleichzeitig eingereichten Patentanmeldung "Brennelement für einen Siedewasserreaktor mit strömungsgünstigen Abstandhaltern" des gleichen Anmelders beschrieben.

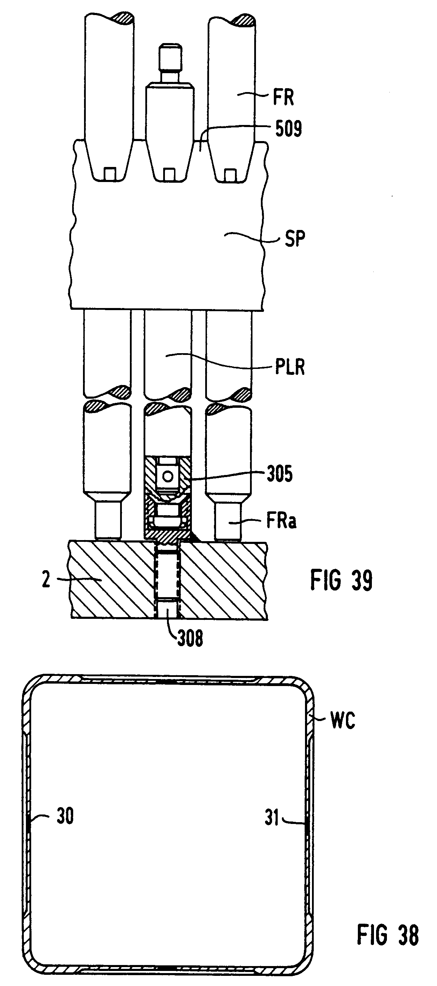

Über schmale Anlagenoppen 508 ist der Abstandhalter an den Innenflächen des in Figur 38 im Querschnitt gezeigten Brennelementkastens WC abgestützt.

Dieser Brennelementkasten weist nur an den Ecken und seinem unteren Rand die übliche Dicke auf, die Mittelteile der Seitenwände (und häufig auch der ganze obere Teil des Brennelementkastens) kann zur Verringerung des Materialaufwandes und zur Verbesserung der Querschnittsverhältnisse zwischen Brennstoff, Strukturmaterial und Moderator verringert sein. Dazu kann ein entsprechend gewalztes Blech an seinen Enden über eine Schweißnaht 30 verbunden sein, der zur Erhaltung der Symmetrie weitere Schweißnähte 31 an den anderen Kastenseiten entsprechen können.

Figur 39 zeigt eine Aufsicht auf den beschriebenen Abstandhalter SP, der an seinem oberen Rand Strömungsleitflächen, z.B. nach innen gerichtete Fahnen 509 an den Außenstegen, enthalten kann. Mit FR2 ist dabei einer der Brennstäbe aus der Gruppe der kürzeren Brennstäbe dargestellt, die mit ihren profilierten Verlängerungen 305 in entsprechende Sockel oder Adapter eingreifen, die in Bohrungen 308 der Bodenplatte 2 eingesetzt sind. Die langen Brennstäbe FRl dagegen stehen vorteilhaft mit ihren unteren Endkappen FRa stumpf auf der Bodenplatte 2 auf.

Die Verkürzung der Brennstäbe der zweiten Gruppe schafft die Möglichkeit, in axialer Richtung eine optimale Brennstoffverteilung im Brennelement zu erreichen und gleichzeitig das Verhältnis von Brennstoff zu Moderator (Kühlmittel) den Bedürfnissen der Neutronenökonomie besonders anzupassen.

Eine andere Möglichkeit dieser Anpassung ist gegeben, wenn neben einer Gruppe normaler, praktisch auf der ganzen Länge des Brennelementes mit Brennstoff gefüllter Brennstäbe eine zweite Gruppe von Brennstäben verwendet wird, die jeweils einen mit Brennstoff gefüllten, abgeschlossenen unteren Teil mit entsprechenden, an der Bodenplatte gehaltenen unteren Endkappen aufweisen, wobei sich aber an diesen unteren Teil ein rohrförmiger oberer Teil mit Kühlmittelöffnungen an beiden Enden anschließt. Diese oberen Teile stellen daher zusätzliche Kühlmittelrohre dar und erhöhen das für flüssigen Moderator zur Verfügung stehende Volumen, können andererseits aber ebenfalls in Abstandhaltermaschen gehalten und einer gewünschten Form der Strömungsverteilung angepaßt werden. Dadurch können die Verhältnisse im Brennelement stabilisiert werden.

Die Erfindung schafft so ein Brennelement, das kostengünstig herzustellen, für Reparaturen und Inspektionen leicht zu montieren oder demontieren und gewünschten strömungstechnischen und neutronenökonomischen Verhältnissen angepaßt ist.

## Patentansprüche

1. Brennelement für einen Siedewasserreaktor mit
a) einem ein Bündel zueinander paralleler Brennstäbe (FR) seitlich umgebenden, oben und unten offenen Brennelementkasten (WC),
b) einer mit Kühlmittelauslässen (7) versehenen Deckplatte (6) zum Abdecken des oberen, offenen Endes des Brennelementkastens, und gekennzeichnet durch
c) einen aus mehreren Einzelteilen gefertigten Fußteil (FT) mit
i) einem gegossenen Übergangsstück (2), das eine Eintrittsöffnung (3a) an seinem unteren Ende und einen in das offene untere Ende des Brennelementkastens (WC) eingesetzten oberen Rand (202) aufweist und einen sich von der Eintrittsöffnung nach oben trichterförmig erweiternden Strömungskanal umgibt, und
ii) einer an den oberen Rand des Übergangsstücks (2) angesetzten und dort angeschweißten Bodenplatte (1), die von Kühlmitteleinlässen (3) durchsetzt ist und das offene untere Ende des Brennelementkastens abdeckt.

2. Brennelement nach Anspruch 1, **dadurch gekennzeichnet**, daß die Bodenplatte (1) auf den oberen Rand aufgesetzt ist.

3. Brennelement nach Anspruch 1, **dadurch gekennzeichnet**, daß die Bodenplatte (1) auf ihrer dem Strömungskanal zugewandten Unterseite eine umlaufende Nut (206) besitzt und der obere Rand (202) des Übergangsstücks in diese Nut eingreift.

4. Brennelement nach Anspruch 3, **dadurch gekennzeichnet**, daß die Nut einen zum Strömungskanal offenen Spalt (d) bildet.

5. Brennelement nach Anspruch 4, **dadurch gekennzeichnet**, daß der obere Rand des Übergangsstücks in den Spalt vorspringende Nasen (204) mit an der Bodenplatte anliegenden Paßflächen (205) aufweist.

6. Brennelement nach einem der Ansprüche 1 bis 5, **dadurch gekennzeichnet**, daß der Brennelementkasten einen viereckigen Innenquerschnitt, Übergangsstück und Bodenplatte jeweils einen viereckigen Außenquerschnitt mit vier dem Brennelementkasten zugewandten Seitenflächen aufweisen und daß jeweils mittlere Teile der Seitenflächen eine von der dem Brennelementkasten zugewandten Seite aufgebrachte Schweißnaht (210) tragen.

7. Brennelement nach einem der Ansprüche 1 bis 7, **dadurch gekennzeichnet**, daß die Bodenplatte siebförmig von den Kühlmitteleinlässen durchsetzt ist, die so geformt sind, daß an ihnen im Kühlmittel mitgeführte Fremdkörper, die vorgegebene Abmessungen überschreiten, zurückgehalten werden.

8. Brennelement nach einem der Ansprüche 1 bis 7, **dadurch gekennzeichnet**, daß das Übergangsstück mindestens zwei seitlich aus dem Strömungskanal führende Öffnungen (211) aufweist.

9. Brennelement nach einem der Ansprüche 1 bis 8, **dadurch gekennzeichnet**, daß die Bodenplatte (1) in der Mitte einen Durchbruch enthält, den das untere Endstück (WRa) eines zu den Brennstäben parallelen, die Bodenplatte mit der Deckplatte kraftschlüssig verbindenden, unten und oben offenen Wasserrohres (WR) durchgreift.

10. Brennelement nach Anspruch 9, **dadurch gekennzeichnet**, daß das untere Endstück des Wasserrohres verdrehungssicher im Durchbruch gehalten ist.

11. Brennelement nach einem der Ansprüche 1 bis 10, **dadurch gekennzeichnet**, daß am oberen Rand des Übergangsstücks mindestens eine gegen den Brennelementkasten abgestützte Feder anliegt.

12. Brennelement nach Anspruch 11, **dadurch gekennzeichnet**, daß die Feder einen in ein Profil am oberen Rand des Übergangsstücks eingreifenden Rand aufweist.

13. Brennelement nach einem der Ansprüche 1 bis 12, **dadurch gekennzeichnet**, daß die Bodenplatte (1) Bohrungen (308) enthält, in die Mittel zum Befestigen wenigstens einiger Brennstäbe (FR) greifen.

14. Brennelement nach Anspruch 13, **dadurch gekennzeichnet**, daß ein Teil der Brennstäbe (PLR) kürzer ist als ein anderer Teil der Brennstäbe (FR) und nur für die kürzeren Brennstäbe Mittel zum Befestigen an der Bodenplatte vorgesehen sind.

15. Brennelement nach Anspruch 13 oder 14, **dadurch gekennzeichnet**, daß die Mittel zum Befestigen als Steckverbindungen ausgebildet sind.

16. Fußteil für ein Brennelement eines Siedewasserreaktors mit einem Übergangsstück (200), das einen sich längs einer Mittelachse nach oben trichterförmig erweiternden Strömungskanal umgibt und an dessen unterem Ende mindestens eine Eintrittsöffnung (3a) und an seinem oberen Ende einen Rand (202) aufweist, an den eine Kühlmitteleinlässe (3) für einen das Brennelement durchströmenden Kühlmittelstrom aufweisende, den Strömungskanal oben abdeckende, einstückige Bodenplatte (1) angeschweißt ist.

17. Fußteil nach Anspruch 16, **dadurch gekennzeichnet**, daß die Bodenplatte (1) in den oberen Rand des Übergangsstücks (202) über ein Profil (204, 206) an der Bodenplatte und/oder am oberen Rand des Übergangsstücks eingreift.

18. Fußteil nach Anspruch 16 oder 17, **dadurch gekennzeichnet**, daß die Bodenplatte (400′) mit einem zu den Brennstäben senkrechten Spiel am oberen Rand des Übergangsstücks (400) angesetzt und in ihrer maßgenauen Position durch eine Schweißnaht fixiert ist.

## Claims

1. Fuel element for a boiling-water reactor having
a) a fuel-element housing (WC) open to the top and bottom and laterally surrounding a bunch of fuel rods (FR) which are parallel to each other,
b) a cover plate (6), provided with coolant outlets (7), for covering the upper, open end of the fuel-element housing, and characterized by
c) a foot part (FT) made from several individual parts, having
i) a cast transition piece (2), which has an inlet opening (3a) at its lower end and an upper edge (202) inserted into the open lower end of the fuel-element housing (WC) and which surrounds a flow channel extending from the inlet opening to the top in a funnel-shaped manner, and
ii) a base plate (1) attached to the upper edge of the transition piece (2) and welded thereon, the base plate being penetrated by coolant inlets (3) and covering the open lower end of the fuel-element housing.

2. Fuel element according to claim 1, characterized in that the base plate (1) is mounted on to the upper edge.

3. Fuel element according to claim 1, characterized in that the base plate (1) has on its underside facing the flow channel a circumferential groove (206) and the upper edge (202) of the transition piece engages into this groove.

4. Fuel element according to claim 3, characterized in that the groove forms a gap (d) which is open towards the flow channel.

5. Fuel element according to claim 4, characterized in that the upper edge of the transition piece has lugs (204) which project into the gap and have fitting surfaces (205) abutting the base plate.

6. Fuel element according to one of claims 1 to 5, characterized in that the fuel-element housing has a four-cornered inner cross section, the transition piece and the base plate in each case have a four-cornered outer cross section with four lateral surfaces facing the fuel-element housing and in that in each case the centre parts of the lateral surfaces support a welding seam (210) applied from the side facing the fuel-element housing.

7. Fuel element according to one of claims 1 to 7, characterized in that the base plate is penetrated in sieve-like manner by the coolant inlets, which have a form which traps foreign bodies which are carried along in the coolant and which exceed specified dimensions.

8. Fuel element according to one of claims 1 to 7, characterized in that the transition piece has at least two openings (211) leading laterally out of the flow channel.

9. Fuel element according to one of claims 1 to 8, characterized in that the base plate (1) contains in the middle an opening through which the lower end piece (WRa) of a water pipe (WR) engages, the pipe being parallel to the fuel rods, frictionally connecting the base plate and the cover plate and being open at the bottom and the top.

10. Fuel element according to claim 9, characterized in that the lower end piece of the water pipe is held in a rotationally secure manner in the opening.

11. Fuel element according to one of claims 1 to 10, characterized in that at least one spring supported against the fuel-element housing abuts the upper edge of the transition piece.

12. Fuel element according to claim 11, characterized in that the spring has an edge engaging into a section at the upper edge of the transition piece.

13. Fuel element according to one of claims 1 to 12, characterized in that the base plate (1) contains bores (308) into which means engage for fastening at least a few fuel rods (FR).

14. Fuel element according to claim 13, characterized in that a portion of the fuel rods (PLR) is shorter than another portion of the fuel rods (FR) and means for fastening to the base plate are only provided for the shorter fuel rods.

15. Fuel element according to claim 13 or 14, characterized in that the fastening means are formed as plug connections.

16. Foot part for a fuel element of a boiling-water reactor with a transition piece (200), which surrounds a flow channel extending along a centre axis to the top in a funnel-shaped manner and at its lower end has at least one inlet opening (3a) and at its upper end an edge (202) to which there is welded a one-piece base plate (1) which has coolant inlets (3) for a coolant flow flowing through the fuel element and covers the flow channel at the top.

17. Foot part according to claim 16, characterized in that the base plate (1) engages into the upper edge of the transition piece (202) by way of a section (204, 206) at the base plate and/or at the upper edge of the transition piece.

18. Foot part according to claim 16 or 17, characterized in that the base plate (400′) is attached to the upper edge of the transition piece (400) with clearance at right angles to the fuel rods and is fixed in its dimensionally accurate position by way of a welding seam.

## Revendications

1. Assemblage combustible pour un réacteur à eau bouillante, comportant
a) un boîtier-canal (WC) pour l'assemblage combustible, qui entoure latéralement une grappe de crayons combustibles (FR) parallèles et qui est ouvert à sa partie supérieure et à sa partie inférieure,
b) une plaque supérieure d'assemblage formant couvercle (6) pourvue d'orifices (7) pour le fluide de refroidissement et qui sert à recouvrir l'extrémité supérieure ouverte du boîtier-canal de l'assemblage combustible,
et caractérisé par
c) une partie formant pied (FT) formée de plusieurs éléments individuels et comportant
i) un élément de jonction (2) moulé, ayant un orifice d'entrée (3a) à son extrémité inférieure et un bord (202) supérieur inséré dans l'extrémité inférieure ouverte du boîtier-canal (WC) de l'assemblage combustible, et entourant un canal d'écoulement, qui s'élargit vers le haut en forme d'entonnoir, à partir de l'orifice d'entrée, et
ii) une plaque inférieure d'assemblage (1), qui est montée sur le bord supérieur de l'élément de jonction (2) et y est soudée, qui est traversée par des orifices (3) prévues pour le fluide de refroidissement et qui recouvre l'extrémité inférieure ouverte du boîtier-canal de l'assemblage combustible.

2. Assemblage combustible suivant la revendication 1, caractérisé par le fait que la plaque inférieure d'assemblage (1) est montée sur le bord supérieur.

3. Assemblage combustible suivant la revendication 1, caractérisé par le fait que la plaque inférieure d'assemblage (1) comporte, dans sa face inférieure tournée vers le canal d'écoulement, une gorge (206) circonférentielle et que le bord supérieur (202) de l'élément de jonction s'engage dans cette gorge.

4. Assemblage combustible suivant la revendication 3, caractérisé par le fait que la gorge forme une fente (d) qui s'ouvre en direction du canal d'écoulement.

5. Assemblage combustible suivant la revendication 4, caractérisé par le fait que le bord supérieur de l'élément de jonction comporte des becs (204) qui font saillies dans la fente et qui ont des surfaces d'adaptation (205) reposant sur la plaque inférieure d'assemblage.

6. Assemblage combustible suivant l'une des revendications 1 à 5, caractérisé par le fait que le boîtier-canal de l'assemblage combustible comporte une section transversale intérieure carrée, et que l'élément de jonction et la plaque inférieure d'assemblage comprennent respectivement une section transversale extérieure carrée comportant quatre surfaces latérales tournées vers le boîtier-canal de l'assemblage combustible, et que des parties médianes des surfaces latérales portent un cordon (210) de soudure appliqué à partir du côté tourné vers le boîtier-canal de l'assemblage combustible.

7. Assemblage combustible suivant l'une des revendications 1 à 7, caractérisé par le fait que la plaque inférieure d'assemblage est traversée à la manière d'un tamis par les orifices pour le fluide de refroidissement, qui ont une forme telle que des corps étrangers entraînés conjointement dans le fluide de refroidissement et qui dépassent des dimensions prédéterminées, y sont retenus.

8. Assemblage combustible suivant l'une des revendications 1 à 7, caractérisé par le fait que l'élément de jonction comprend au moins deux ouvertures (211) qui débouchent latéralement à partir du canal d'écoulement.

9. Assemblage combustible suivant l'une des revendications 1 à 8, caractérisé par le fait que la plaque inférieure d'assemblage (1) comporte, au centre, un passage, dans lequel s'engage l'élément d'extrémité inférieur (WRa) d'un tube de circulation d'eau (WR), qui est parallèles aux crayons combustibles, qui relie selon une liaison de force la plaque inférieure d'assemblage à la plaque supérieure d'assemblage formant couvercle et qui est ouvert à sa partie inférieure et à sa partie supérieure.

10. Assemblage combustible suivant la revendication 9, caractérisé par le fait que l'élément d'extrémité inférieur du tube de circulation d'eau est retenu avec blocage en rotation dans le passage.

11. Assemlage combustible suivant l'une des revendications 1 à 10, caractérisé par le fait qu'au moins un ressort, qui prend appui contre le boîtier-canal de l'assemblage combustible, est appliqué sur le bord supérieur de l'élément de jonction.

12. Assemblage combustible suivant la revendication 11, caractérisé par le fait que le ressort comporte un bord qui s'engage dans un profil aménagé dans le bord supérieur de l'élément de jonction.

13. Assemblage combustible suivant l'une des revendications 1 à 12, caractérisé par le fait que la plaque inférieure d'assemblage (2) est munie de perçages (308), dans lesquels s'engagent des moyens pour la fixation d'au moins quelques crayons combustibles (FR).

14. Assemblage combustible suivant la revendication 13, caractérisé par le fait qu'une partie (PLR) des crayons combustibles est plus courte qu'une autre partie des crayons combustibles (FR) et que des moyens pour la fixation à la plaque inférieure d'assemblage sont prévus uniquement pour les crayons combustibles les plus courts.

15. Assemblage combustible suivant la revendication 13 ou 14, caractérisé par le fait que les moyens de fixation sont réalisés sous la forme de connecteurs.

16. Partie formant pied pour un assemblage combustible d'un réacteur à eau bouillante comportant un élément de jonction (200), qui entoure un canal d'écoulement, qui s'élargit en forme d'entonnoir vers le haut le long d'un axe médian et qui comporte, à son extrémité inférieure, au moins un orifice d'entrée (3a) et, à son extrémité supérieure, un bord (202), auquel est soudée une plaque inférieure d'assemblage (1) d'un seul tenant, qui comporte des orifices (3) d'entrée pour un courant du fluide de refroidissement traversant l'assemblage combustible et qui ferme à sa partie supérieure le canal d'écoulement.

17. Partie formant pied suivant la revendication 16, caractérisée par le fait que la plaque inférieure d'assemblage (1) s'engage dans le bord supérieur de l'élément de jonction (202) par l'intermédiaire d'un profil (204,206) disposé sur la plaque inférieure d'assemblage et/ou sur le bord supérieur de l'élément de jonction.

18. Partie formant pied suivant la revendication 16 ou 17, caractérisée par le fait que la plaque inférieure d'assemblage (400′) est montée avec jeu, perpendiculairement aux crayons combustibles, sur le bord supérieur de l'élément de jonction (400) et est fixée, dans sa position précise du point de vue des cotes, par un cordon de soudure.
